# DEMANDE DE BREVET EUROPEEN

(11) **EP 0 800 784 A1**
(43) Date de publication de la demande: **15.10.1997**
(21) Numéro de dépôt: 97400798.1
(22) Date de dépôt: 08.04.1997
(51) Int. Cl.: A47L 13/17

(54) **Tampon de récurage et procédé pour sa préparation**

(30) Priorité: 09.04.1996 FR 9604399
(71) Demandeur: FINANCIERE ELYSEES BALZAC, F-75008 Paris (FR)
(72) Inventeur: Johnson, Bryan, 60000 Beauvais (FR)
(74) Mandataire: Le Roux, Martine

(57) **Abrégé**

La présente invention a pour objets de nouveaux tampons de récurage et leur procédé de préparation. Lesdits tampons comportent un bloc de matériau alvéolaire de type mousse synthétique ou substrat cellulosique entre deux nontissés, ledit bloc étant lié mécaniquement par des fibres de chacun desdits nontissés qui traversent ledit bloc et s'entremêlent avec les fibres de l'autre desdits nontissés . De façon caractéristique :
- l'un au moins desdits nontissés, qualifié de nontissé hydrophobe, est à base de fibres hydrophobes,
- le(s)dit(s) nontissé(s) hydrophobe(s) est(sont) lié(s) mécaniquement audit bloc de matériau alvéolaire, de manière lâche,
- lesdits nontissés et ledit bloc sont, de plus, dans leur masse respective ainsi qu'à leurs surfaces de contact, liés par l'intermédiaire d'un liant chimique et/ou suite à la fusion au moins partielle de certaines fibres hydrophobes constitutives desdits nontissés.

## Description

La présente invention a pour objet un tampon de récurage et son procédé de préparation. Ledit tampon de récurage peut exister selon différentes variantes.

Selon une variante de réalisation, ledit tampon renferme des charges abrasives et peut alors constituer un avantageux substitut de la laine d'acier. La laine d'acier est proposée depuis longtemps sous la forme de tampons, pour, notamment, le récurage du matériel de cuisine tel que les casseroles, les poêles, les marmites... Les tampons de laine d'acier ont, toutefois, l'inconvénient de rouiller, de se désagréger rapidement, d'être difficiles à nettoyer et désagréables au toucher. Les tampons abrasifs de l'invention ne présentent pas ces inconvénients, tout en présentant des propriétés abrasives équivalentes. Selon une autre variante de réalisation, ledit tampon ne renferme pas ou peu de charges abrasives et peut être utilisé comme récurant de surfaces fragiles. Il peut également renfermer des charges récurantes non abrasives.

Selon d'autres variantes de réalisation, ledit tampon de récurage n'est récurant voire abrasif que sur une zone. Il présente sur une autre zone un autre caractère, essuyant, par exemple.

En tout état de cause, le tampon de l'invention est un tampon du type composite. Il comporte un bloc de matériau alvéolaire entre deux nontissés.

Selon l'art antérieur, divers types de tampons récurants et/ou abrasifs ont été décrits. On a notamment décrit, dans la demande EP-A-0 359 495, des tampons résultant de la simple solidarisation, en leurs deux extrémités, de multiples filaments organiques thermoplastiques continus, frisés ou ondulés. La Demanderesse a elle même proposé, dans la demande EP-A-0 326 488, des tampons composites dont la structure inclut une mousse de polyuréthanne entre deux nontissés ; ladite mousse et lesdits nontissés n'étant solidarisés, par thermosoudage, qu'à leur périphérie. Dans le brevet US-A-3,862,522, on a également décrit des tampons composites. Ceux-ci présentent une structure dissymétrique qui inclut une mousse entre un nontissé et une couche de résine. Ladite mousse a été aiguilletée avec ledit nontissé ; les fibres dudit nontissé qui ont ainsi traversé ladite mousse ne sont qu'ancrées ponctuellement dans ladite couche de résine. Leur stabilisation est toute relative et, en tout état de cause, la mousse est fragilisée.

La Demanderesse a, par ailleurs, décrit, dans le brevet ES-A-512 766, un procédé pour la fabrication de produits d'essuyage. Lesdits produits d'essuyage sont obtenus par double aiguilletage d'une mousse, centrale, avec deux nontissés hydrophiles, disposés de part et d'autre de ladite mousse. L'aiguilletage mis en oeuvre est un aiguilletage dense.

D'une manière générale, les nontissés intervenants dans les matériaux composites, du type nontissé/mousse, nontissé/mousse/autre substrat, nontissé/ mousse/nontissé, de l'art antérieur peuvent être imprégnés dans leur masse d'un liant et/ou avoir subi une pulvérisation d'un tel liant, éventuellement chargé.

Le tampon de récurage, principal objet de la présente invention, comporte donc un bloc de matériau alvéolaire entre deux nontissés. Les nontissés susceptibles d'intervenir dans la structure d'un tel tampon sont des nontissés au sens de la norme ISO 9092 : 1988 (nontissé : feuille manufacturée constituée de voile ou de nappe de fibres orientées directionnellement ou au hasard, liées par friction et/ou cohésion et/ou adhésion ...) mais aussi, avantageusement, des voiles ou nappes de fibres "vierges" au sein desquels aucun liage, notamment chimique et/ou mécanique, n'a encore été mis en oeuvre . Le terme nontissé employé dans la suite du présent texte couvre les deux concepts ci-dessus. Le second a été présenté comme avantageux dans la mesure où l'homme du métier comprendra aisément la difficulté qu'il y aurait à mettre en oeuvre l'invention - le liage mécanique, précisé ci-après - avec des nontissés préalablement fortement liés.

La structure du tampon de l'invention est plus ou moins symétrique, les nontissés intervenants pouvant être de même nature, de natures voisines voire de natures différentes. En tout état de cause, l'un au moins des nontissés intervenants - de nature hydrophobe - est solidarisé de façon originale au bloc de matériau alvéolaire. C'est par le biais de ce(s) nontissé(s) hydrophobe(s), solidarisé(s) de manière originale audit bloc, que les tampons de l'invention acquièrent leur caractère récurant innovant. La structure des tampons de l'invention, qui résulte de ce mode de solidarisation originale : bloc de matériau alvéolaire / nontissé(s) hydrophobe(s), se caractérise à la fois par sa solidité (sa rigidité) et le faible pouvoir d'encrassement du (des) nontissé(s) hydrophobe(s) intervenant(s) dans celle-ci. Au sein de ladite structure, chaque fibre du (des) nontissé(s) hydrophobe(s) intervenant(s) est tenue en place, ce qui notamment permet de réhausser le caractère récurant et/ou abrasif de charges récurantes et/ou abrasives réparties au sein du(des)dit(s) nontissé(s). Au sein de ladite structure, on peut par ailleurs assurer le piègage et le relargage contrôlé d'autres charges, telles des savons, des agents tensioactifs ou autres ...

Les tampons de l'invention comportent donc, de façon classique, un bloc de matériau alvéolaire entre deux nontissés. Ledit bloc de matériau alvéolaire, totalement ou partiellement recouvert desdits nontissés, consiste généralement en une mousse synthétique, telle une mousse polyuréthanne ou un substrat cellulosique, tel une éponge ou une toile-éponge. La forme et les dimensions dudit bloc sont généralement telles que celui-ci présente une faible épaisseur (sensiblement constante) et deux faces principales (avantageusement sensiblement parallèles), sur lesquelles on trouve les nontissés. Ledit bloc peut notamment consister en un cylindre de révolution, un polyèdre et notamment un parallélépipède. Il peut également présenter une forme ovoïdale (une épaisseur non constante). En tout état de cause, à la lecture de ce qui suit, l'homme du métier comprendra que les tampons revendiqués peuvent présenter de multiples formes.

Ledit bloc de matériau alvéolaire est lié auxdits nontissés par un liage mécanique, per se classique : des fibres de chacun desdits nontissés traversent ledit bloc et s'entremêlent avec les fibres de l'autre nontissé.

De façon caractéristique, au sein de la structure des tampons de l'invention, lesdits nontissés et ledit bloc de matériau alvéolaire sont solidarisés par deux types de liage spécifiques, différents, complémentaires ; l'un au moins des nontissés intervenants étant à base de fibres hydrophobes.

Plus précisément, les tampons de l'invention présentent, en combinaison, les trois caractéristiques ci-après :
- l'un au moins desdits nontissés, qualifié de nontissé hydrophobe, est à base de fibres hydrophobes,
- le(s)dit(s) nontissé(s) hydrophobe(s) est(sont) lié(s) mécaniquement audit bloc de matériau alvéolaire, de manière lâche,
- lesdits nontissés et ledit bloc sont, de plus, dans leur masse respective ainsi qu'à leurs surfaces de contact, liés par l'intermédiaire d'un liant chimique et/ou suite à la fusion au moins partielle de certaines fibres hydrophobes constitutives desdits nontissés.

De façon tout-à-fait originale, la structure des tampons de l'invention renferme au moins un nontissé - voile ou nappe, plus généralement - à base de fibres hydrophobes, lié d'une part mécaniquement de manière lâche, et d'autre part par un liage thermique et/ou chimique, au bloc de matériau alvéolaire. Ledit nontissé hydrophobe renferme au moins 80 % en poids de fibres hydrophobes. Le choix de ce type de fibres est important en ce qu'il limite l'accrochage de la saleté au sein dudit nontissé (lors de son utilisation) et en ce qu'il confère audit nontissé un pouvoir récurant intrinsèque. Ledit nontissé est avantageusement à base de fibres de polyamide, polyester, polypropylène, polychlorure de vinyle, mélamine, aramide, polytétrafluoroéthylène ou d'un mélange de ces fibres. Le nontissé hydrophobe intervenant est à base de mélanges de fibres renfermant au moins deux types de fibres différents, certaines thermofusibles et d'autres plus résistantes en température si le liage mécanique est renforcé par la fusion au moins partielle desdites fibres thermofusibles.

Les fibres constitutives de ce nontissé hydrophobe présentent généralement un titre compris entre 2 et 200 dtex, avantageusement entre 10 et 100 dtex.

Ledit nontissé hydrophobe présente généralement un grammage entre 20 et 800 g/m², avantageusement entre 300 et 400 g/m².

Deux nontissés hydrophobes, identiques ou différents, interviennent avantageusement dans la structure des tampons composites de l'invention. De tels tampons sont ainsi récurants, de par la nature desdits nontissés, sur toute leur surface externe ou sur leurs deux faces principales ...

Font également partie du cadre de la présente invention, des tampons dont la structure inclut un seul nontissé hydrophobe tel que décrit ci-dessus. L'autre nontissé intervenant est alors avantageusement un nontissé hydrophile. Il renferme une quantité importante de fibres hydrophiles (quantité suffisante pour lui conférer des propriétés d'essuyage), avantageusement choisies parmi les fibres de coton et/ou de rayonne. On entend par l'intervention d'une quantité importante de telles fibres au moins 50 % en poids desdites fibres. En faisant intervenir un tel nontissé hydrophile, on confère, au niveau dudit nontissé, un caractère essuyant au tampon récurant de l'invention. Ce caractère essuyant est d'autant plus prononcé que ledit nontissé est hydrophile.

On a toutefois prévu au sein d'un tel nontissé hydrophile l'éventuelle présence de fibres hydrophobes. De telles fibres hydrophobes peuvent se révèler indispensables pour compléter un liage mécanique lâche, pour assurer un liage thermique complémentaire.

Lesdits nontissés - deux nontissés hydrophobes ou un nontissé hydrophobe et un nontissé hydrophile - sont solidarisés au corps alvéolaire central sur toute leur surface de contact par deux types de liage : un liage mécanique et un liage complémentaire, chimique et/ou thermique. Au sein desdits nontissés (notamment du(des) nontissé(s) hydrophobe(s)), chaque fibre est ainsi stabilisée. Lesdits nontissés par le biais de ces liages se trouvent aussi solidarisés entre eux.

Le liage mécanique mis en oeuvre ne fait pas intervenir de produits tiers. Il est assuré par des fibres constitutives des deux nontissés. Lesdites fibres de chacun desdits nontissés qui interviennent dans la mise en oeuvre de ce liage mécanique traversent le bloc de matériau alvéolaire et présentent, à l'issue de cette traversée, une de leur extrémité, sur une longueur non négligeable (généralement plus de 10 mm), libre, entraînée au-delà de l'épaisseur de l'autre nontissé (disposé sur la face opposée du bloc de matériau alvéolaire). Pour la plupart desdites fibres, ladite extrémité libre s'entremêle alors avec les fibres dudit autre nontissé (elle s'intègre dans la structure dudit autre nontissé). Il y a ainsi une réelle collaboration entre les deux nontissés, pour la stabilisation relative de leurs fibres respectives qui ont traversé la structure alvéolaire. Cette stabilisation est par ailleurs renforcée par le liage complémentaire décrit en détail plus avant dans le présent texte. Pour un faible pourcentage de ces fibres qui ont traversé le bloc de matériau alvéolaire (faible pourcentage dans la mesure où le liage mécanique est mis en oeuvre de façon lâche), leur extrémité libre peut être reprise par les aiguilles et re-introduite dans le bloc de matériau alvéolaire. Ceci contribue également à la stabilisation de l'ensemble mais n'est nullement recherché dans la mesure notamment où la tension ainsi créée ferme la structure ouverte des nontissés, diminue l'épaisseur du tampon ...

Un tel liage mécanique est, de façon caractéristique, mis en oeuvre avec les fibres du(des) nontissé(s) hydrophobe(s) intervenant(s) de manière lâche (à raison de moins de 100 coups/cm², avantageusement à raison d'environ ou de moins de 50 coups/cm²). Ceci est impératif car il convient que ledit liage mécanique, d'une part n'affecte pas de façon dommageable la structure du matériau alvéolaire traversé et d'autre part, ne ferme pas la structure ouverte des nontissés. On peut ainsi préserver l'intégrité des tampons de l'invention, préserver le caractère récurant des nontissés intervenants et minimiser le colmatage de ceux-ci, à l'usage, par la saleté. On a noté, de façon tout-à-fait surprenante, qu'un nontissé hydrophobe ainsi lié mécaniquement s'encrasse moins et bouloche moins que ledit nontissé, à l'état libre.

Lorsqu'un nontissé hydrophile intervient dans la structure des tampons de l'invention, il peut également être lié mécaniquement au bloc de matériau alvéolaire, de manière lâche. Il peut aussi l'être, avantageusement, de manière beaucoup plus dense.

Le liage mécanique peut être mis en oeuvre selon différentes variantes. On préconise, selon une variante préférée, de lier mécaniquement lesdits nontissés et ledit bloc de matériau alvéolaire par aiguilletage, plus précisément par double aiguilletage dans la mesure où le bloc de matériau alvéolaire est traversé par des fibres de l'un et l'autre des nontissés. On peut, dans le contexte de cette technique particulière, préciser l'expression "de manière lâche" et celle "de manière beaucoup plus dense", employées ci-dessus. Dans le cadre de l'invention, l'aiguilletage est mis en oeuvre avec les fibres du(des) nontissé(s) hydrophobe(s) à raison de 5 à 50 coups/cm². Il est avantageusement mis en oeuvre avec lesdites fibres à raison d'environ 20 coups/cm². Lorsqu'un nontissé hydrophile intervient, l'aiguilletage mis en oeuvre à son niveau l'est avantageusement à raison de plus de 100 coups/cm², généralement à raison d'environ 200 coups/cm². On peut, selon une autre variante, lier mécaniquement lesdits nontissés et ledit bloc de matériau alvéolaire par jets d'eau. La densité des points de liaison préconisée est celle indiquée précédemment pour le liage par aiguilletage.

A un tel liage mécanique, mis en oeuvre de façon lâche avec le(s) nontissé(s) hydrophobe(s), on a associé, selon l'invention, un liage complémentaire. Ledit liage complémentaire n'est pas quelconque. Il doit, en combinaison avec le liage mécanique, conférer à l'ensemble composite : nontissé(s) hydrophobe(s)/bloc de matériau alvéolaire, les propriétés de rigidité, de stabilité souhaitées (propriétés non acquises par le simple liage mécanique, mis en oeuvre de façon lâche) tout en ne nuisant pas, de façon appréciable, à l'intégrité dudit ensemble composite, à son faible pouvoir d'encrassement et à son caractère récurant voire abrasif.

Ledit liage complémentaire intervient nécessairement en plus du liage mécanique. Il est complémentaire en ce qu'il assure avec ledit liage mécanique un liage suffisant tout en préservant à l'ensemble composite les propriétés énoncées ci-dessus.

Ledit liage complémentaire, lorsqu'il intervient un nontissé hydrophile lié mécaniquement de manière dense au bloc de matériau alvéolaire, sert aussi à compenser, au niveau dudit bloc de matériau alvéolaire, les altérations dues audit liage mécanique.

Le principal caractère original des tampons de l'invention réside dans la combinaison de ces deux types de liage au niveau du(des) nontissé(s) hydrophobe(s) ... combinaison qui, par exemple, conduit à un résultat tout à fait différent de celui qui serait obtenu avec un unique liage mécanique, mis en oeuvre de manière plus dense.

Le liage complémentaire mis en oeuvre est un liage chimique et/ou thermique. Il peut avoir été mis en oeuvre selon deux variantes principales. Dans le cadre de la première, au sein de la structure des tampons de l'invention, les nontissés et le bloc de matériau alvéolaire sont liés - en sus du liage mécanique - par l'intermédiaire d'un liant chimique, tant dans leur masse respective qu'à leurs surfaces de contact (liage chimique complémentaire). Dans le cadre de la seconde, lesdits nontissés et ledit bloc de matériau alvéolaire sont liés - en sus du liage mécanique - par la fusion partielle de certaines fibres constitutives desdits nontissés, tant dans leur masse respective qu'à leurs surfaces de contact (liage thermique complémentaire).

On précise ci-après chacune desdites variantes. On indique, toutefois, d'ores et déjà, que selon une troisième variante, on a pu mettre en oeuvre au sein de la structure des tampons de l'invention les deux types de liage chimique et thermique.

Selon la première variante, un liant chimique intervient dans la masse du composite, par ailleurs lié mécaniquement. On fait généralement intervenir un précurseur dudit liant au sein de la structure du composite, de manière homogène, et on génère ledit liant à partir dudit précurseur (par traitement thermique, par exemple). Dans le cadre de cette variante, on utilise avantageusement à titre de précurseur dudit liant un latex acrylique. D'une manière générale, ledit liant chimique est souvent un film polymère généré in situ.

Selon la seconde variante, le liage complémentaire est obtenu, sans apport de liant chimique, par simple fusion (au moins partielle) de certaines fibres constitutives des nontissés. Lesdites fibres dites thermofusibles sont mises à fondre, par traitement thermique adéquat du composite lié mécaniquement. Lesdites fibres ont ainsi fondues au sein des nontissés, aux interfaces nontissés/bloc de matériau alvéolaire, comme au sein dudit matériau alvéolaire dans la mesure où certaines d'entre elles sont intervenues dans le liage mécanique.

Les tampons de l'invention comportent, de façon caractéristique, les stigmates de tous les types de liage mis en oeuvre en leur sein. Des fibres de chacun des deux nontissés traversent le bloc de matériau alvéolaire. On peut, par ailleurs, détecter, tant au sein des nontissés qu'au sein du bloc alvéolaire la présence d'un liant chimique et/ou celles de fibres thermofusibles au moins en partie fondues. On trouve ainsi, stabilisés, lesdits nontissés et ledit matériau alvéolaire.

Comme indiqué précédemment, les tampons de l'invention présentent sur au moins une partie de leur surface externe, généralement sur au moins une de leurs faces principales, des propriétés récurantes intrinsèques dues aux fibres hydrophobes du(des) nontissé(s) hydrophobe(s) intervenant(s) (propriétés intrinsèques, renforcées par le liage spécifique mis en oeuvre : chaque fibre est stabilisée dans la structure) et peuvent, par ailleurs, présenter des propriétés récurantes plus prononcées voire des propriétés abrasives de par la présence de charges adéquates dans le(s)dit(s) nontissé(s).

De façon caractéristique, le (les) nontissé(s) hydrophobe(s) intervenant(s) peut (peuvent) donc renfermer des charges récurantes et/ou abrasives. On peut ainsi trouver de telles charges sur une seule face du tampon de l'invention, sur les deux faces ... On peut également trouver deux types différents de telles charges, sur chacune des faces d'un tampon de l'invention. Il peut ainsi présenter une face plus abrasive que l'autre... De telles charges, récurantes et/ou abrasives, sont connues de l'homme du métier ainsi que leur mode de fixation au sein des nontissés, mode de fixation qui fait généralement intervenir une résine, par exemple du type phénolique.

Il n'est pas totalement exclu que l'éventuel nontissé hydrophile intervenant renferme de telles charges récurantes et/ou abrasives. Ceci ne présente toutefois a priori pas grand intérêt.

A titre de charges abrasives peuvent notamment intervenir des particules d'alumine, de calcite, de carbure de silicium, de silice, de talc... A titre de charges récurantes peuvent notamment intervenir des particules de matière plastique telles que des particules de polyuréthanne, de polyméthacrylate de méthyle, de polystyrène ...

Comme indiqué précédemment, les tampons de l'invention peuvent, par ailleurs, inclure dans leur structure, tant au niveau des nontissés qu'au niveau du bloc de matériau alvéolaire, d'autres charges et notamment des savons et/ou agents tensioactifs. Divers types de charges peuvent ainsi intervenir, conditionnées sous la forme de microcapsules, de type réservoir ou matriciel. Elles peuvent aussi intervenir non conditionnées ...

La Demanderesse, dans le cadre de la présente invention, s'est plus particulièrement intéressée aux charges du type savon (produit obtenu par saponification) et/ou agent tensioactif (produit, en général, susceptible de générer une mousse) : charges dites savonneuses. De telles charges peuvent évidemment être introduites dans la structure des tampons de l'invention de manière classique, par simple imprégnation. Dans cette hypothèse, il n'y a pas réel piégeage desdites charges au sein de ladite structure et celles-ci sont relarguées assez rapidement à l'usage. On n'exclut toutefois pas du cadre de l'invention ce type d'intervention desdites charges savonneuses.

Cependant, la Demanderesse propose présentement de faire intervenir lesdites charges savonneuses - du type savon et/ou agents tensioactifs - de façon originale. Elle est parvenue à maîtriser leur introduction dans la structure du tampon, leur piégeage relatif au sein de ladite structure et leur relargage progressif de ladite structure. A cette fin, elle préconise de faire intervenir lesdites charges, au sein de ladite structure, piégées dans un film polymère. Ainsi, les tampons de l'invention renferment-ils avantageusement dans leur structure - au sein des nontissés et/ou au sein du bloc de matériau alvéolaire - au moins un savon et/ou au moins un agent tensioactif, au moins en partie piégé(s) dans un film polymère.

Le couple charge(s) savonneuse(s) - polymère est évidemment choisi de sorte que le résultat escompté soit obtenu. Il convient d'une part que les deux constituants dudit couple présente une inertie chimique l'un vis-à-vis de l'autre et d'autre part que le piégeage autorise un relargage progressif. Un tel relargage peut être mis en oeuvre au travers du film polymère, stable ou suite à l'hydrolyse de celui-ci, lors de l'utilisation du tampon ... A titre de précurseur d'un tel polymère, on préconise l'intervention d'un latex, notamment acrylique. Les charges savonneuses - savon(s) et/ou agent(s) tensioactif(s) - sont dissoutes et/ou dispersées dans ledit latex. Celui-ci chargé est introduit, par pulvérisation, imprégnation, enduction ou autre technique, dans la structure des tampons de l'invention. Il peut être introduit tant au niveau du bloc de matériau alvéolaire, de l'un et/ou l'autre des nontissés qu'au niveau de l'ensemble du tampon composite. En lieu et place d'un tel latex, on peut faire intervenir une résine.

Il peut se révéler particulièrement avantageux de faire intervenir à titre de polymère piégeant au moins un savon et/ou au moins un agent tensioactif le liant chimique qui assure en partie ou totalement le liage complémentaire.

On précise plus loin dans le présent texte, au niveau de la description du procédé de préparation des tampons, qu'il est toutefois, a priori, difficile de faire intervenir conjointement, dans un même latex ou une même résine, des charges récurantes et/ou abrasives et des charges de type savon et/ou agent tensioactif.

On en vient maintenant au second objet de la présente invention à savoir le procédé de préparation des tampons décrits ci-dessus. Ledit procédé a déjà été largement évoqué en référence à la description du produit.

Ledit procédé de préparation englobe le liage mécanique du bloc de matériau alvéolaire avec les nontissés, ledit liage mécanique amenant des fibres de chacun desdits nontissés à traverser ledit bloc et à s'entremêler avec les fibres de l'autre nontissé.

De façon caractéristique :
- ledit liage mécanique est mis en oeuvre avec les fibres du(des) nontissé(s) hydrophobe(s) de manière lâche;
- ledit liage mécanique est suivi d'un liage complémentaire consistant en un liage chimique (à l'issue duquel un film polymère est généralement généré dans la structure du composite) et/ou un liage thermique (on traite le composite lié mécaniquement de sorte que certaines fibres constitutives des nontissés fondent au moins partiellement et augmentent ainsi la cohésion de l'ensemble).

Le liage mécanique mis en oeuvre avec les fibres du(des) nontissé(s) hydrophobe(s) de manière lâche (on entend par là, à raison de moins de 100 coups/cm² et avantageusement à raison d'environ ou de moins de 50 coups/cm²) consiste avantageusement en un aiguilletage mis en oeuvre à raison de 5 à 50 coups/cm². La technologie du liage par jets d'eau peut également être mise en oeuvre. On a vu précédemment qu'un liage mécanique plus serré peut être mis en oeuvre avec les fibres du nontissé hydrophile (à raison de plus de 100 coups/cm²) lorsqu'un tel nontissé hydrophile intervient dans la structure des temps de l'invention.

Le liage complémentaire est un liage chimique et/ou thermique. Il est mis en oeuvre de façon classique.

Pour un liage chimique, le composite lié mécaniquement est généralement imprégné d'un précurseur du liant puis traité de sorte que le liant soit généré in situ. Le traitement est généralement un traitement thermique qui est responsable de la formation d'un film polymère (cas de certains latex thermoplastiques) pouvant être accompagnée d'une réticulation (cas de résines ou de certains latex thermodurcissables).

Pour un liage thermique, on a prévu évidemment des nontissés renfermant des fibres thermofusibles (à une température raisonnable) et des fibres plus résistantes en température. Le pourcentage d'intervention des fibres thermofusibles est suffisant pour assurer l'effet recherché aussi bien dans les nontissés hydrophobes ou hydrophobe et hydrophile, qu'à l'interface nontissés/matériau alvéolaire...

On met avantageusement en oeuvre à titre de liage complémentaire un unique liage chimique.

Il est toutefois clair que le procédé de l'invention prévoit également, en lieu et place dudit liage chimique, un liage thermique ainsi que, en sus dudit liage chimique, un tel liage thermique (l'ordre de mise en oeuvre de ces deux types de liages complémentaires étant à optimiser).

A l'issue des deux étapes essentielles du procédé de l'invention - liage mécanique + liage complémentaire - on obtient un tampon de récurage de l'invention.

Le pouvoir récurant d'un tel tampon peut être renforcé par intervention de charges récurantes et/ou abrasives. Ainsi, le procédé de l'invention peut-il, en outre, comprendre, après le liage mécanique et avant et/ou après le liage complémentaire le dépôt, sur au moins l'un des deux nontissés, d'une composition renfermant des charges récurantes et/ou abrasives. Cette étape de dépôt est généralement suivie d'un traitement, thermique ou autre, pour la fixation desdites charges au sein du(des)dit(s) nontissé(s). La composition déposée est généralement une résine chargée en lesdites charges abrasives que l'on traite thermiquement dans le but de la réticuler. Cette méthode de fixation de charges au sein d'un nontissé n'est pas per se originale.

Avantageusement, comme déjà précisé ci-dessus, on charge également les tampons de l'invention en au moins un savon et/ou au moins un agent tensioactif. On parle en général de charges savonneuses. Lesdites charges savonneuses peuvent intervenir sous différentes formes, à différents stades du procédé d'élaboration des tampons de l'invention. Selon des variantes dudit procédé, qui ne s'excluent pas l'une l'autre, on peut :
- incorporer des charges savonneuses au sein du bloc de matériau alvéolaire, avant l'élaboration du composite et son aiguilletage ; une telle incorporation faisant ou non intervenir un liant chimique (ou un précurseur de liant chimique) ;
- incorporer des charges savonneuses au sein de la structure du composite : matériau alvéolaire aiguilleté avec les deux nontissés ; lesdites charges intervenant avec le liant chimique (ou son précurseur) destiné à assurer au moins en partie le liage complémentaire ;
- incorporer des charges savonneuses au sein d'au moins un des deux nontissés du composite lié mécaniquement et chimiquement et/ou thermiquement par dépôt sur ledit nontissé d'une composition savonneuse, dépôt suivi, si nécessaire, d'un traitement thermique ou autre, pour la fixation des charges savonneuses ; ladite composition étant à base d'un latex ou d'une résine susceptible de générer un film polymère.

Les deux dernières des trois variantes ci-dessus d'introduction et de stabilisation de charges savonneuses au sein des tampons de l'invention sont tout à fait originales. On note que la première desdites trois variantes peut ou non faire intervenir un polymère fixateur des charges savonneuses. Dans l'hypothèse où elle fait intervenir un tel polymère, elle est aussi originale.

Le procédé de l'invention peut, par ailleurs, comprendre l'incorporation d'autres types de charges, notamment sous la forme de microcapsules...

On précise ici que les charges récurantes et/ou abrasives d'une part et les charges savonneuses d'autre part n'interviennent généralement pas dans un même précurseur de film polymère de fixation desdites charges.

On préconise en fait, pour l'élaboration de tampons de l'invention renfermant des charges récurantes et/ou abrasives dans deux nontissés hydrophobes ainsi que des charges savonneuses de mettre en oeuvre le procédé de l'invention suivant l'une ou l'autre des trois variantes ci-après :

### 1ère variante

On prépare un bloc de matériau alvéolaire aux dimensions souhaitées ainsi que les nontissés hydrophobes adéquats.

On imprègne ledit bloc d'une formulation savonneuse, formulation aqueuse ou à base d'un latex ou d'une résine. On sèche ledit bloc imprégné.

On aiguillette, de manière lâche, ledit bloc (savonné) sur ses deux faces avec les nontissés.

On lie chimiquement le composite ainsi obtenu (on fait avantageusement intervenir ici le même latex ou la même résine que celle chargée en savon qui est intervenue en amont). Ledit liage chimique inclut une étape d'imprégnation et un traitement thermique du composite imprégné.

On dépose alors sur chaque face (sur chaque nontissé) du composite ainsi lié et chargé en savon une composition chargée en particules abrasives et/ou récurantes (composition type résine phénolique, par exemple) et on assure par traitement thermique le durcissement de ladite composition.

### 2ème variante

On prépare un bloc de matériau alvéolaire aux dimensions souhaitées ainsi que les nontissés hydrophobes adéquats.

On aiguillette, de manière lâche, ledit bloc sur ses deux faces avec lesdits nontissés.

On dépose sur chaque face (chaque nontissé) du composite, seulement lié mécaniquement, une composition chargée en particules abrasives et/ou récurantes (composition type résine phénolique, par exemple) et on assure par traitement thermique le durcissement de ladite composition.

On lie chimiquement le composite ainsi obtenu en faisant intervenir une composition savonneuse. (On imprègne généralement ledit composite avec la composition adéquate (précurseur de liant chimique chargé) et on traite thermiquement le tout).

### 3ème variante

On prépare un bloc de matériau alvéolaire aux dimensions souhaitées ainsi que les nontissés hydrophobes adéquats.

On aiguillette, de manière lâche, ledit bloc sur ses deux faces avec lesdits nontissés.

On lie chimiquement le composite ainsi obtenu (on imprègne par exemple ledit composite avec un latex et on traite thermiquement ledit composite imprégné).

On dépose sur chaque face (chaque nontissé) du composite ainsi lié une composition chargée en particules abrasives et/ou récurantes (composition type résine phénolique, par exemple) et on assure par traitement thermique le durcissement de ladite composition.

On dépose enfin sur chaque face dudit composite ainsi rendue abrasive et/ou plus récurante une composition savonneuse (par exemple un latex chargé en savon) et l'on fixe ladite composition savonneuse par traitement thermique.

Cette variante du procédé de l'invention est illustrée par l'exemple proposé plus loin dans le présent texte.

Ces trois variantes de mise en oeuvre du procédé de l'invention ne sont nullement exhaustives.

L'invention est illustrée par l'exemple ci-après. On décrit dans ledit exemple le procédé d'élaboration d'un tampon abrasif de l'invention.

Dans un premier temps, on prépare, à partir d'une mousse présentant deux faces sensiblement parallèles, espacées de 10 mm (épaisseur de ladite mousse), un bloc de matériau alvéolaire au sens de l'invention. Ladite mousse est une mousse synthétique à cellules ouvertes, de petites tailles. Il s'agit plus précisément d'une mousse polyuréthanne (PU) commercialisée par la société GIUSEPPE OLMO sous la dénomination olmo ET 40. Ladite mousse présente une densité de 40 kg/m³.

Parallèlement, on fabrique, à l'aide d'une carde, des voiles de nontissé, à partir de fibres hydrophobes. Les fibres utilisées sont des fibres de polyamide (PA) de 17 dtex et 40 mm de longueur, commercialisées par la société Dupont. Les voiles obtenus possèdent un grammage de 300 g/m².

Le bloc de mousse est dans un deuxième temps aiguilleté sur ses deux faces avec les voiles de nontissé. L'aiguilletage est mis en oeuvre à raison de 6 coups/cm², à 13 mm de pénétration (ceci signifie que la course des aiguilles, audelà de l'épaisseur de la mousse et du second nontissé traversé, est prolongée de 13 mm). On a ainsi des fibres de chacun desdits nontissés qui vont faire partie intégrante de l'autre nontissé.

Le complexe ou composite ainsi obtenu est imprégné, dans toute sa masse, par foulardage, avec une formule d'imprégnation qui présente la composition ci-après.

Pour 100 g, ladite formule renferme :
39,6 g d'eau distillée ;
52,8 g d'un latex acrylique en émulsion, commercialisé par la société ROHM ET HAAS, sous la dénomination Primal AC201 ;
7,7 g de pigment noir, commercialisé par la société HOECHST sous la dénomination Imperon K2B.

Ladite formule est obtenue par simple mélange de ses constituants.

Ladite formule est utilisée, pour l'imprégnation du composite, à raison de 100 g/m² (sec). Le composite ainsi imprégné est alors soumis à un traitement thermique pour réticuler ladite formule imprégnée. On porte chaque face dudit composite à 150°C pendant 4 minutes. On obtient ainsi le composite lié mécaniquement et chimiquement.

Sur chacune des faces opposées de celui-ci, on dépose ensuite une composition abrasive. Ladite composition, pour 100 g, renferme :
31g d'une résine phénolique de type résol commercialisée par la société CRAY VALLEY sous le nom commercial Norsophen ;
16,2 g d'eau distillée ;
0,3 g de pigment noir, commercialisé par la société HOECHST sous la dénomination Imperon K2B;
52,6 g de charges abrasives. On utilise du Corindon Blanc F280 commercialisé par la société PECHINEY ELECTROMETALLURGIE sous la marque Cristalba.

La composition abrasive est obtenue par simple mélange de ses constituants.

Elle est enduite (déposée) sur chaque face du composite par pulvérisation à raison de 190g/m² (sec). Le composite ainsi enduit de la composition abrasive est alors soumis à un traitement thermique, pour réticuler ladite composition abrasive (et fixer ainsi les charges abrasives) à 170°C pendant 4 minutes, pour chaque face.

Pour finir, on dépose sur chacune des faces, rendues abrasives, dudit composite, une formule savonneuse dont la composition est précisée ci-après.

Pour 100 g, elle renferme :
49 g de tensioactif anionique, commercialisé par la société HOECHST sous la dénomination de Génapol LRO liquide ;
49g d'un latex copolymère de styrène butadiène en dispersion commercialisé par la société DOW CHEMICAL FRANCE sous la dénomination DOW XZ 947 5503 ;
2 g de pigment noir, commercialisé par la société HOECHST sous la dénomination de Imperon K2B.

La formule savonneuse est obtenue par simple mélange de ses constituants.

Elle est enduite (déposée) sur chaque face dudit composite par pulvérisation à raison de 600 g/m² (sec).

Le composite ainsi obtenu est alors soumis à un ultime traitement thermique pour fixer ladite formule savonneuse. On porte chaque face dudit composite à 150°C pendant 8 minutes.

On obtient, à l'issue de ce traitement thermique, un tampon abrasif de l'invention. Ledit tampon se caractérise par :
- sa stabilité (rigidité) ;
- son abrasivité;
- son faible pouvoir d'encrassement ;
- sa capacité à relarguer longtemps du "savon".

## Revendications

1. Tampon de récurage, comportant un bloc de matériau alvéolaire de type mousse synthétique ou substrat cellulosique entre deux nontissés, ledit bloc étant lié mécaniquement par des fibres de chacun desdits nontissés qui traversent ledit bloc et s'entremêlent avec les fibres de l'autre desdits nontissés ; ledit tampon étant caractérisé en ce que :
- l'un au moins desdits nontissés, qualifié de nontissé hydrophobe, est à base de fibres hydrophobes,
- le(s)dit(s) nontissé(s) hydrophobe(s) est(sont) lié(s) mécaniquement audit bloc de matériau alvéolaire, de manière lâche,
- lesdits nontissés et ledit bloc sont, de plus, dans leur masse respective ainsi qu'à leurs surfaces de contact, liés par l'intermédiaire d'un liant chimique et/ou suite à la fusion au moins partielle de certaines fibres hydrophobes constitutives desdits nontissés.

2. Tampon de récurage selon la revendication 1, caractérisé en ce que l'un desdits nontissés, qualifié de nontissé hydrophile, renferme une quantité importante de fibres hydrophiles avantageusement choisies parmi les fibres de coton et/ou de rayonne ; ledit nontissé hydrophile étant avantageusement lié mécaniquement audit bloc de matériau alvéolaire de manière dense.

3. Tampon de récurage selon l'une des revendications 1 ou 2, caractérisé en ce que le(s)dit(s) nontissé(s) hydrophobe(s) intervenant(s) est(sont) à base de fibres de polyamide, de polyester, de polypropylène, de polychlorure de vinyle, de mélamine, d'aramide, de polytétrafluoroéthylène ou d'un mélange de ces fibres.

4. Tampon de récurage selon l'une quelconque des revendications 1 à 3, caractérisé en ce que ledit bloc de matériau alvéolaire consiste en une mousse de polyuréthanne ou en une éponge cellulosique.

5. Tampon de récurage selon l'une quelconque des revendications 1 à 4, caractérisé en ce que lesdits nontissés et ledit bloc de matériau alvéolaire sont liés mécaniquement par double aiguilletage ; l'aiguilletage mis en oeuvre avec les fibres du(des) nontissé(s) hydrophobe(s) l'ayant été à raison de 5 à 50 coups/cm².

6. Tampon de récurage selon l'une quelconque des revendications 1 à 5, caractérisé en ce que lesdits nontissés et ledit bloc sont liés chimiquement par un film polymère généré in situ, notamment à partir d'un latex acrylique.

7. Tampon de récurage selon l'une quelconque des revendications 1 à 6, caractérisé en ce que l'un au moins desdits nontissés renferme des charges récurantes et/ou abrasives.

8. Tampon de récurage selon l'une quelconque des revendications 1 à 7, caractérisé en ce qu'il renferme dans sa structure au moins un savon et/ou au moins un agent tensioactif.

9. Tampon de récurage selon la revendication 8, caractérisé en ce que ledit savon ou/et ledit agent tensioactif est/sont au moins en partie piégé(s), dans la structure dudit tampon, au moyen d'un film polymère, consistant avantageusement en ledit liant chimique.

10. Procédé de préparation d'un tampon de récurage selon l'une quelconque des revendications précédentes, ledit procédé comprenant le liage mécanique dudit bloc de matériau alvéolaire avec lesdits nontissés, ledit liage amenant des fibres de chacun desdits nontissés à traverser ledit bloc et à s'entremêler avec les fibres de l'autre nontissé ; ledit procédé étant caractérisé en ce que :
- ledit liage mécanique mis en oeuvre avec les fibres du(des) nontissé(s) hydrophobe(s) l'est de manière lâche ;
- ledit liage mécanique est suivi d'un liage complémentaire consistant en un liage chimique et/ou un liage thermique basé sur une fusion au moins partielle de certaines fibres hydrophobes constitutives desdits nontissés.

11. Procédé selon la revendication 10, caractérisé en ce que ledit liage mécanique consiste en un double aiguilletage ; l'aiguilletage mis en oeuvre avec les fibres du(des) nontissé(s) hydrophobe(s) l'étant à raison de 5 à 50 coups/cm².

12. Procédé selon l'une des revendications 10 ou 11, caractérisé en ce qu'il comprend, en outre, après ledit liage mécanique et avant ou après ledit liage complémentaire, le dépôt, sur au moins l'un desdits nontissés, d'une composition renfermant des charges récurantes et/ou abrasives ; dépôt suivi, si nécessaire, d'un traitement thermique ou autre, pour la fixation desdites charges récurantes et/ou abrasives.

13. Procédé selon l'une quelconque des revendications 10 à 12, caractérisé en ce qu'il comprend l'incorporation au sein du bloc de matériau alvéolaire, avant son liage mécanique avec les nontissés, d'au moins un savon et/ou d'au moins un agent tensioactif.

14. Procédé selon l'une quelconque des revendications 10 à 13, caractérisé en ce que ledit liage complémentaire consiste en un liage chimique qui fait intervenir un liant chargé en au moins un savon et/ou au moins un agent tensioactif.

15. Procédé selon l'une quelconque des revendications 10 à 14, caractérisé en ce qu'il comprend, en outre, après ledit liage mécanique et ledit liage complémentaire, le dépôt, sur au moins l'un desdits nontissés, d'une composition chargée en savon(s) et/ou agent(s) tensioactif(s), ladite composition étant à base d'un latex ou d'une résine susceptible de générer un film polymère ; dépôt suivi, si nécessaire, d'un traitement thermique ou autre, pour la fixation desdites charges.
